(19) Europäisches Patentamt
European Patent Office
Office européen des brevets

(11) **EP 3 559 965 B1**

(12) **FASCICULE DE BREVET EUROPEEN**

(45) Date de publication et mention
de la délivrance du brevet:
**16.12.2020 Bulletin 2020/51**

(21) Numéro de dépôt: **17829266.0**

(22) Date de dépôt: **20.12.2017**

(51) Int Cl.:
*H01H 9/54* (2006.01)     *H01H 33/16* (2006.01)
*H01H 33/59* (2006.01)

(86) Numéro de dépôt international:
**PCT/FR2017/053749**

(87) Numéro de publication internationale:
**WO 2018/115753 (28.06.2018 Gazette 2018/26)**

(54) **INSTALLATION ÉLECTRIQUE HAUTE TENSION CONTINUE ET PROCÉDÉ DE CONTRÔLE D'UN APPAREIL DE COUPURE DANS UNE TELLE INSTALLATION**

ELEKTRISCHE GLEICHSPANNUNGSANLAGE UND VERFAHREN ZUR STEUERUNG EINER SCHALTVORRICHTUNG IN SOLCH EINER ANLAGE

DC HIGH-VOLTAGE ELECTRICAL INSTALLATION AND METHOD FOR CONTROLLING A SWITCHING DEVICE IN SUCH AN INSTALLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA TN**

(30) Priorité: **20.12.2016 FR 1662822**

(43) Date de publication de la demande:
**30.10.2019 Bulletin 2019/44**

(73) Titulaire: **Supergrid Institute**
**69100 Villeurbanne (FR)**

(72) Inventeurs:
• **CREUSOT, Christophe**
**01120 Pizay (FR)**
• **AIT BRAHIM, Issam**
**69200 Vénissieux (FR)**
• **BERTINATO, Alberto**
**69003 Lyon (FR)**
• **LOUME, Dieynaba Sakiliba**
**69100 Villeurbanne (FR)**

(74) Mandataire: **Cabinet Beau de Loménie**
**51 avenue Jean Jaurès**
**BP 7073**
**69301 Lyon Cedex 07 (FR)**

(56) Documents cités:
EP-A1- 2 450 926     WO-A1-2006/100192
FR-A- 1 549 517      FR-A5- 2 102 793
GB-A- 2 519 791      US-A- 3 641 357

**Description**

L'invention concerne une installation électrique haute tension continue comprenant un appareil de coupure d'un circuit électrique haute tension continue.

De manière traditionnelle, on connait des réseaux électriques à l'échelle d'une région, d'un pays ou d'un continent, dans lesquels des courants électriques sont transportés sur plusieurs dizaines, centaines ou milliers de kilomètres. Il est actuellement envisagé le développement de tels réseaux ou portions de réseaux en courant continu à haute tension ou très haute tension. Dans de tels réseaux, les conducteurs à haute tension peuvent êtres agencés notamment sous forme de lignes aériennes ou de câbles souterrains ou sous-marins.

Bien entendu, des appareils de coupure de courant sont prévus dans les réseaux haute tension pour couper la circulation de courant dans un conducteur donné. Généralement, un appareil de coupure, dans sa position ouverte, sépare deux parties d'un circuit électrique dont l'une peut être reliée à une alimentation électrique, qui dans les cas envisagés est sous haute tension. Parmi ces appareils de coupure, les disjoncteurs sont prévus pour, en cas d'anomalies sur le circuit, ouvrir rapidement le circuit électrique constitué par le conducteur. Un disjoncteur est notamment prévu pour supporter une ouverture en charge, c'est-à-dire une ouverture d'un circuit électrique dans lequel circule un courant d'intensité nominale maximale sous la tension nominale, voire même, en cas de défaut électrique dans le circuit, un courant de court-circuit excédant l'intensité nominale maximale. D'autres appareils de coupure, les sectionneurs, sont plus particulièrement prévus pour, en position ouverte, séparer deux parties d'un circuit électrique, dont l'une est par exemple reliée à une alimentation électrique, en assurant une distance de séparation suffisante pour garantir une isolation électrique permanente.

Lorsqu'un appareil de coupure a été ouvert et qu'il convient de le refermer pour rétablir la circulation du courant dans le circuit, on peut se retrouver face à la problématique d'un très fort appel de courant dans la partie du circuit qui était auparavant isolée de l'alimentation électrique par l'appareil de coupure, que l'on appelle de manière arbitraire partie aval. Cela est d'autant plus important dans le cas où cette partie aval comporte un câble souterrain ou sous-marin de grande longueur, par exemple de longueur supérieure à 10 kilomètres, voire supérieure à 100 kilomètres. En effet, des tels câbles forment généralement une capacité importante, notamment du fait de leur grande capacité linéique et/ou de leur grande longueur, avec la terre ou l'eau. A la mise sous tension d'un câble, c'est-à-dire au moment de la fermeture de l'appareil de coupure, la capacité du câble tend à créer un appel de courant très important. Sans mesure de protection particulière, cet appel de courant peut largement dépasser le double de l'intensité nominale maximale du courant dans le circuit. Cet appel de courant peut alors endommager certains éléments du circuit.

Dans le domaine des réseaux à haute tension en courant alternatif, il est connu de prévoir une résistance d'insertion insérée dans le circuit électrique au moment du ré-enclenchement d'une ligne pour limiter la surtension susceptible d'apparaître au cours d'une telle manœuvre. Il est aussi connu, toujours dans le domaine des réseaux à haute tension en courant alternatif, de prévoir une résistance ou inductance d'insertion associée à un banc de compensateurs de compensation réactive, ou de prévoir une résistance ou inductance d'insertion associée à un transformateur pour limiter le courant d'appel lors de l'enclenchement du transformateur à vide.

Toutefois, jusqu'à présent, le problème des pics de courant d'appel dans les circuits à haute tension continue n'a pas été traité. Cependant, les documents FR-2.102.793, et FR-1.549.517 montrent de l'art antérieur dans le domaine de la haute tension.

L'invention vise donc à proposer une solution permettant de limiter l'appel de courant à une valeur maîtrisée, par exemple à une valeur n'excédant pas le double de la valeur de l'intensité nominale maximale du courant dans le circuit. Cela permet, dans certaines applications impliquant des convertisseurs, notamment des convertisseurs AC/DC, d'éviter le blocage des composants actifs des convertisseurs AC/DC à savoir les transistors bipolaires à grille isolée (appelés généralement IGBT, de l'anglais Insulated Gate Bipolar Transistor). Par ailleurs l'invention vise le second objectif de minimiser le temps de rétablissement du courant nominal dans le conducteur en particulier lorsque le rétablissement de courant succède à une opération d'élimination d'un courant de défaut. La solution consistant à prévoir une résistance d'insertion, telle qu'elle est utilisée dans le domaine des courants alternatifs, n'est pas directement transposable, notamment car elle entraîne des temps de rétablissement du courant nominal trop importants.

Dans ce but, l'invention propose une installation électrique haute tension continue selon la revendication 1.

Selon d'autres caractéristiques optionnelles de l'invention, prises seules ou en combinaison :

- L'installation peut comporter un système de résistance variable contrôlée pour lequel ladite valeur de résistance prend au moins deux valeurs intermédiaires non nulles distinctes comprises entre la valeur inférieure et la valeur supérieure.
- Un premier et un deuxième interrupteurs d'insertion peuvent être agencés dans le circuit principal de manière être traversés par le courant de service dans leur état fermé, et une première et une seconde résistance d'insertion discrètes, associées respectivement au premier et au deuxième interrupteur d'insertion, peuvent être agencées chacune respectivement électriquement en parallèle de l'interrupteur d'insertion associé.

- Au moins un interrupteur d'insertion peut être mécanique.
- Au moins un interrupteur d'insertion peut être électronique.
- Au moins un interrupteur d'insertion peut être commandé mécaniquement par un déplacement d'au moins un organe de l'appareil de coupure, par exemple par un déplacement relatif de deux contacts ou paires de contacts électriques de l'appareil de coupure.
- Au moins un interrupteur d'insertion peut être commandé électroniquement.
- Le dispositif de coordination peut comporter une unité électronique de commande.
- L'appareil de coupure peut être un disjoncteur.
- La valeur supérieure de résistance du système de résistance, vue par le courant circulant dans le circuit principal, est par exemple égale ou supérieure au quotient de la tension du réseau par le courant de pic maximal désiré, quotient auquel on retire la valeur d'impédance d'onde équivalente du circuit électrique hors système de résistance variable contrôlée :

$$RSysEqSup = \frac{Udc}{Ides} - Zeq$$

L'invention permet par ailleurs de mettre en œuvre un procédé de contrôle de fermeture d'un appareil de coupure, qui peut être mécanique, dans un circuit électrique haute tension continue d'une installation électrique haute tension continue, caractérisé en ce que le procédé comporte :

- le réglage d'une valeur de résistance d'un système de résistance à résistance variable contrôlée, vue par le courant circulant dans le circuit électrique à une valeur supérieure ;
- l'établissement d'une circulation électrique dans le circuit électrique haute tension continue au travers du système de résistance à résistance variable contrôlée ;
- la modification de la valeur de résistance du système de résistance pour atteindre, à l'expiration d'un premier délai suivant l'établissement de la circulation électrique, une valeur intermédiaire ;
- après l'expiration du premier délai suivant l'établissement de la circulation électrique, la modification de la valeur de résistance du système de résistance pour atteindre, à l'expiration d'un deuxième délai suivant l'établissement de la circulation électrique, une valeur inférieure.

Dans une première variante, un tel procédé peut comporter :

- le réglage d'une valeur de résistance d'un système de résistance à résistance variable contrôlée, vue par le courant circulant dans le circuit électrique à une valeur supérieure ;
- la fermeture de l'appareil de coupure ;
- après la fermeture de l'appareil de coupure, la modification de la valeur de résistance du système de résistance pour atteindre, à l'expiration d'un premier délai suivant la fermeture de l'appareil de coupure, une valeur intermédiaire ;
- après l'expiration du premier délai, la modification de la valeur de résistance du système de résistance pour atteindre, à l'expiration d'un deuxième délai suivant la fermeture de l'appareil de coupure, une valeur inférieure.

Dans une seconde variante, un tel procédé peut comporter :

- le réglage d'une valeur de résistance d'un système de résistance à résistance variable contrôlée, vue par le courant circulant dans le circuit électrique, à une valeur supérieure, et l'établissement de la circulation d'un courant électrique au travers du système de résistance à résistance variable contrôlée par fermeture d'un interrupteur d'insertion ;
- la modification de la valeur de résistance du système de résistance pour atteindre, à l'expiration d'un premier délai, suivant l'établissement de la circulation d'un courant électrique au travers du système de résistance à résistance variable contrôlée, une valeur intermédiaire, par fermeture d'un second interrupteur d'insertion ;
- après l'expiration du premier délai, la modification de la valeur de résistance du système de résistance pour atteindre, à l'expiration d'un deuxième délai suivant l'établissement de la circulation d'un courant électrique au travers du système de résistance à résistance variable contrôlée, une valeur inférieure, par la fermeture de l'appareil de coupure.

L'installation pourra être configurée, notamment par programmation adéquate d'une unité électronique de commande, pour que la valeur de résistance du système de résistance à résistance variable contrôlée soit contrôlée pour prendre une succession de valeurs discrètes décroissantes, et pour qu'une durée d'insertion (Ti-T(i-1)) d'une valeur intermédiaire de résistance, pendant laquelle la valeur de résistance du système de résistance à résistance variable contrôlée est contrôlée pour prendre ladite valeur intermédiaire discrète, soit égale ou supérieure à :

$$- ln\left(\frac{RSysEq(i+1) + Zeq}{RSysEq(i) + Zeq}\right).RSysEq(i).Ceq$$

Où :

- **RSysEq(i)** est une valeur intermédiaire de résistance du système de résistance à résistance variable contrôlée, vue par le courant circulant dans le circuit électrique ;
- **T(i-1)** est l'instant auquel le système de résistance à résistance variable contrôlée est contrôlé pour prendre ladite valeur intermédiaire **RSysEq(i) ;**
- **RSysEq (i+1)** est une valeur de résistance suivante dans l'ordre de succession des valeurs de résistance discrètes du système de résistance à résistance variable contrôlée, vue par le courant circulant dans le circuit électrique ;
- **T(i)** est l'instant auquel le système de résistance à résistance variable contrôlée **(26)** est contrôlé pour passe de ladite valeur intermédiaire **(RSysEq(i))** à la valeur de résistance suivante **(RSysEq(i+1)) ;**
- **Zeq** est la valeur d'impédance d'onde équivalente du circuit électrique **(24),** incluant tout réseau connecté au circuit principal, hors système de résistance variable contrôlée ;
- **Ceq** est la capacité équivalente du circuit électrique **(24),** incluant tout réseau connecté au circuit principal.

De préférence, on prévoit que la durée d'insertion (*Ti - T(i - 1)*) d'une valeur intermédiaire **RSysEq(i)** pendant laquelle la valeur de résistance du système de résistance à résistance variable contrôlée est contrôlée pour prendre ladite valeur intermédiaire discrète **RSysEq(i),** est comprise dans la gamme allant de 1 fois à 1,5 fois la valeur :

$$- ln\left(\frac{RSysEq(i+1) + Zeq}{RSysEq(i) + Zeq}\right).RSysEq(i).Ceq$$

Diverses autres caractéristiques ressortent de la description faite ci-dessous en référence aux dessins annexés qui montrent, à titre d'exemples non limitatifs, des formes de réalisation de l'objet de l'invention.

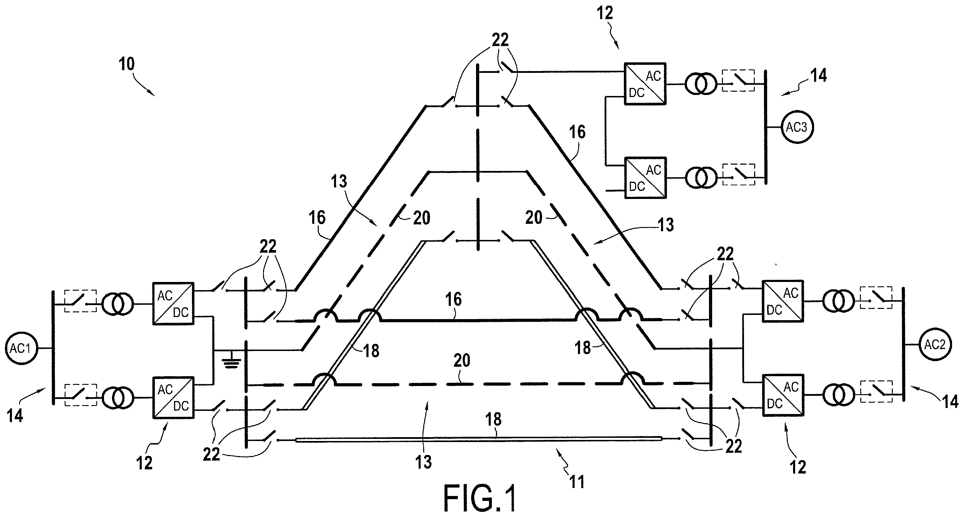

La **Figure 1** illustre un exemple d'un réseau électrique à haute tension comportant notamment une portion de réseau à haute tension continue reliée à différentes portions de réseau à haute tension alternative par des convertisseurs alternatif/continu, ladite portion de réseau à haute tension continue comportant des appareils de coupure, par exemple mécanique.

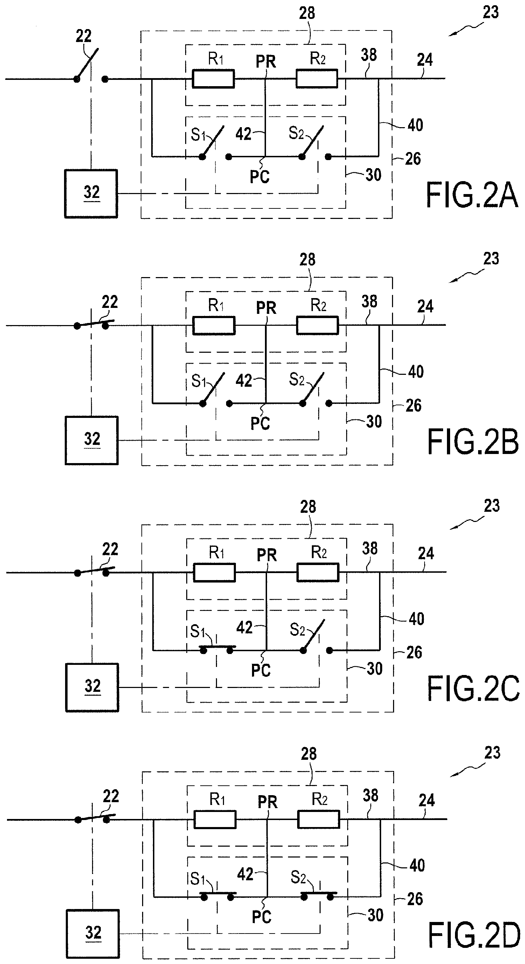

Les **Figures 2A à 2D** illustrent de manière schématique différents états d'une installation comportant, dans un circuit électrique à haute tension continue, un appareil de coupure, par exemple de type disjoncteur, et un système de résistance variable contrôlée associé à l'appareil de coupure conformément aux enseignements de l'invention.

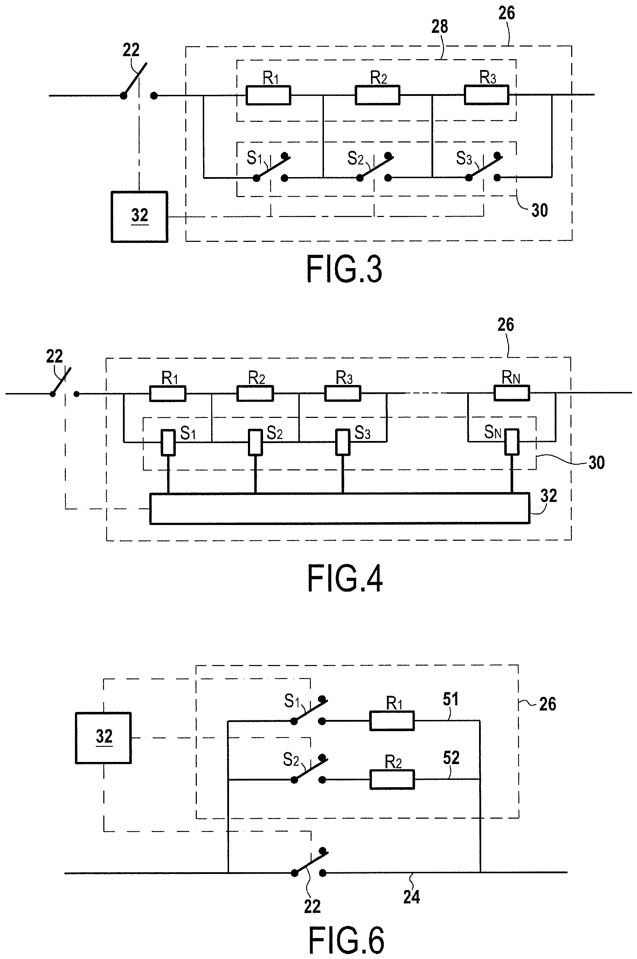

Les **Figures 3** et **4** sont des vues similaires à celles de la **Fig. 2A** illustrant chacune une variante de réalisation du système de résistance variable contrôlée.

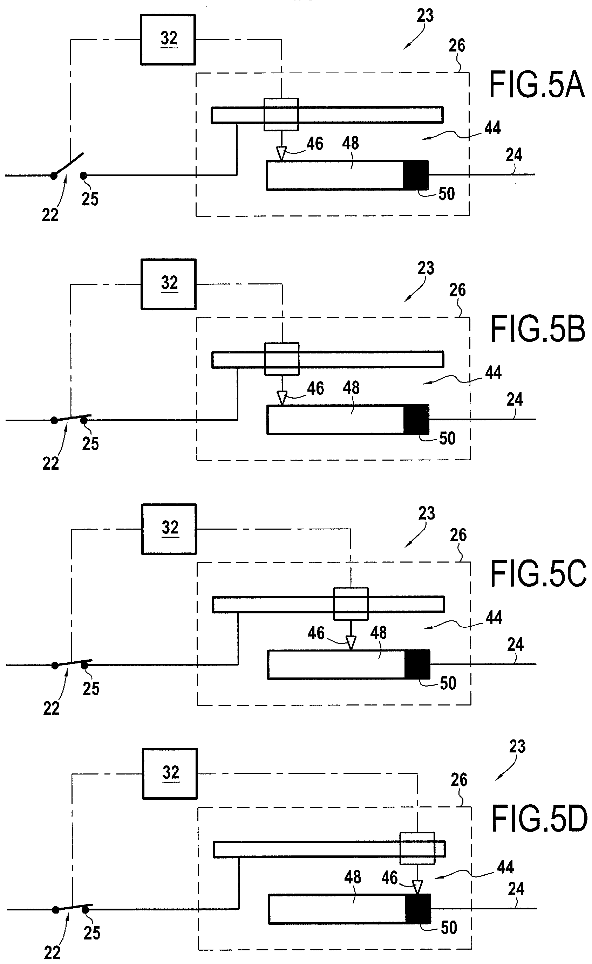

Les **Figures 5A à 5D** ont des vues similaires à celle des **Figures 2A** à **2D** illustrant chacune, de manière schématique, différents états d'un système de résistance variable contrôlée ne faisant pas partie de l'invention.

La **Figures 6** est une vue similaire à celle de la **Fig. 2A** illustrant un système de résistance variable contrôlée ne faisant pas partie de l'invention.

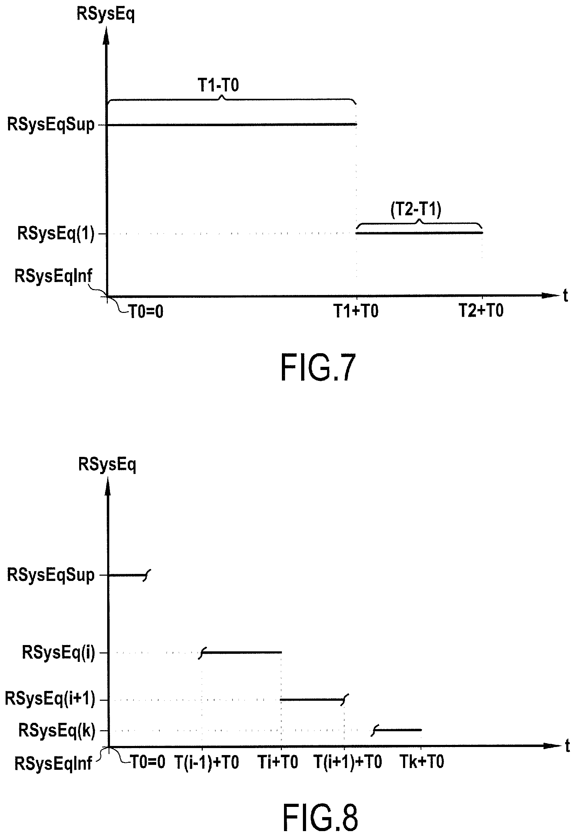

La **Figure 7** est un graphe qui illustre les variations, en fonction du temps, de la valeur de résistance du système de résistance à résistance variable contrôlée, vue par le courant circulant de le circuit principal, pour le mode de réalisation des Figs. 2A à 2D, dans le cadre d'un procédé de contrôle.

La **Figure 8** est un graphe qui illustre les variations, en fonction du temps, de la valeur de résistance du système de résistance à résistance variable contrôlée, vue par le courant circulant de le circuit principal, pour un système de résistance comportant un nombre quelconque de valeurs intermédiaires de résistance, dans le cadre d'un procédé de contrôle.

La **Fig. 1** illustre un système **10** de réseau électrique à haute tension dans lequel l'invention peut être mise en œuvre. Ce système de réseau **10** comporte une portion de réseau électrique à haute tension continue **11** qui est reliée, par des systèmes de convertisseurs alternatifs/continu **12,** à différentes portions de réseau électrique à haute tension alternative **14,** ici au nombre de trois. Dans l'exemple illustré, la portion de réseau électrique à haute tension continue **11** comporte trois sous-portions de réseau à haute tension continue **13,** dont chacune relie un système de convertisseurs **12** associé à une portion de réseau alternative **14** avec un autre système de convertisseurs **12** associé à une autre portion de réseau alternative **14.** Dans l'exemple illustré, les trois sous-portions de réseau à haute tension continue **13** relient donc les trois portions de réseaux alternatives **14** selon une configuration en triangle.

Dans le présent texte, on considère comme haute tension un dispositif dans lequel la tension de service nominale est supérieure à 1000 V en courant alternatif ou 1500 V en courant continu. Une telle haute tension est, de manière complémentaire, qualifiée également de très haute tension lorsqu'elle est supérieure à 50 000 V en courant alternatif ou 75 000 V en courant continu.

Chaque sous-portion de réseau à haute tension continue **13** comporte un conducteur haute tension continue au potentiel positif **16,** un conducteur haute tension continue au potentiel négatif **18** et un conducteur relié au potentiel neutre **20.** Les conducteurs haute tension **16, 18** comprennent par exemple, pour au moins l'une des trois sous-portions de réseaux à haute tension continue **13,** des câbles souterrains ou sous-marins.

Dans l'exemple illustré, chaque conducteur haute tension continue **16, 18** détermine un circuit électrique à haute tension continue. La portion de réseau électrique à haute tension continue **11** comporte, dans les circuits électriques à haute tension continue définis par les conducteurs haute tension continue **16, 18,** des appareils de coupure électrique **22** dont chacun peut se trouver dans un état ouvert susceptible d'interrompre la circulation de courant électrique dans le circuit électrique considéré, ou dans une partie de celui-ci, ou dans un état fermé dans lequel il permet la circulation d'un courant électrique dans le circuit électrique considéré.

Les appareils de coupure électrique **22** peuvent être notamment de type disjoncteur, de types sectionneur, de types interrupteur, de type contacteur, de types coupe-circuit, etc.... Dans les exemples plus particuliers décrits plus bas, l'appareil de coupure **22** est par exemple un disjoncteur.

Les appareils de coupure électriques peuvent notamment être :

- des appareils mécaniques, dans lesquels la coupure électrique est obtenue par déplacement, notamment par écartement, de deux contacts électriques ou paires de contacts électriques ;
- des appareils électroniques, par exemple à IGBT ; ou
- des appareils hybrides.

Dans les appareils mécaniques, le déplacement des contacts électriques est généralement réalisé par des organes de manœuvre ou actionneurs mécaniques, pneumatiques, hydrauliques ou électriques, éventuellement à travers une cinématique de transfert du mouvement. Ce déplacement peut être contrôlé électroniquement.

Dans un réseau haute tension continue, par exemple du type de la portion de réseau haute tension continue **11** décrite ci-dessus, on peut être amené à conduire des opérations d'enclenchement visant à établir la circulation d'un courant, précédemment interrompue, par une opération de fermeture d'au moins un appareil de coupure **22** du réseau. Dans une telle opération d'enclenchement, l'appareil de coupure **22** est amené de son état ouvert à son état fermé. Une opération d'enclenchement peut aussi être nécessaire après une séquence de protection, c'est-à-dire après une séquence au cours de laquelle un appareil de coupure, notamment un disjoncteur, s'est ouvert pour interrompre la circulation de courant dans un circuit suite à la détection de conditions anormales. Une opération d'enclenchement peut aussi intervenir en dehors d'une séquence de protection, par exemple lors de la remise sous tension d'un câble après maintenance par exemple.

Dans le cas d'une séquence de protection, une stratégie consiste à procéder tout d'abord à l'élimination d'un défaut par l'ouverture de tous les disjoncteurs à haute tension continue, notamment ceux qui sont directement associés à la sortie continue des systèmes de convertisseurs. Une fois le défaut identifié, par exemple identifié sur un des conducteurs **16, 18,** haute tension, on remet sous tension le réseau par le ré-enclenchement des disjoncteurs haute tension continue hormis ceux qui encadrent le défaut.

Au moment du ré-enclenchement, le réseau haute tension continue, dans l'exemple de la **Fig. 1** la portion de réseau à haute tension continue **11,** est vu comme une grosse capacité, donc son ré-enclenchement produit un courant d'appel qui, sans mesure particulière, pourrait être amené à dépasser en sortie d'au moins un convertisseur plus de 2 fois, voire plus de 3 fois l'intensité nominale maximale prévue dans le convertisseur entraînant le blocage automatique de ses IGBT et donc la perte de contrôle du convertisseur. Par ailleurs, dans un circuit électrique à haute tension continue, cela pourrait ainsi conduire à la circulation de courants de plusieurs milliers d'ampères, voire plusieurs dizaines de milliers d'ampères. De tels appels de courant excessifs ne pourraient être que dommageables au fonctionnement de l'installation électrique dans son ensemble, notamment par dégradation de certains composants. Par exemple, dans le cadre d'un système de réseau **10** tel que décrit à la **Fig. 1,** de tels appels de courant excessifs lors du ré-enclenchement du courant dans un circuit électrique défini par un des conducteurs à haute tension **16, 18** pourrait entraîner le blocage des IGBT des systèmes de convertisseurs **12,** et donc leur perte de contrôle.

Ainsi, dans le cas particulier d'un système de réseau **10** tel que représenté à la **FIG. 1,** on peut souhaiter remettre sous tension un conducteur haute tension continue sans blocage des IGBTs, notamment des systèmes de convertisseurs **12,** et ce dans un délai de charge du conducteur considéré le plus court possible. On peut par exemple souhaiter que l'intensité du courant d'appel qui s'établit dans le conducteur considéré lors du ré-enclenchement ne dépasse pas le double de la valeur nominale maximale du courant de service supposé circuler dans ce conducteur.

Aussi, l'invention propose d'associer, dans une même installation électrique, à au moins appareil de coupure d'un circuit électrique haute tension continue, un système de résistance variable contrôlée permettant de modifier la valeur de résistance du système de résistance vue par le courant circulant dans le circuit électrique.

Le système de résistance variable contrôlée présente une valeur de résistance capable de prendre au moins trois valeurs distinctes, comprenant au moins une valeur supérieure, une valeur inférieure, et au moins une valeur intermédiaire non nulle comprise entre la valeur inférieure et la valeur supérieure. On note que la valeur intermédiaire non nulle est distincte de la valeur inférieure et de la valeur supérieure.

L'installation comporte un dispositif de coordination permettant de contrôler des instants de commutation des valeurs de résistance du système de résistance en fonction d'un instant de fermeture de l'appareil de coupure. Cette coordination permet d'associer le système de résistance variable contrôlée avec l'appareil de coupure, en assurant que la fermeture de l'appareil de coupure est coordonnée temporellement avec une variation de la valeur de résistance du système de résistance.

On a illustré sur les **Figs. 2A** à **5D** différents modes de réalisation d'une installation électrique **23** comprenant un circuit principal **24** dans lequel circule un courant électrique de service, sous haute tension continue, lors d'un régime de fonctionnement établi de l'installation. Le circuit principal **24** peut notamment être un des conducteurs à haute tension **16, 18** de la portion de réseau à haute tension continue **11** illustrée à la **Fig. 1**. L'installation électrique **23** comporte un appareil de coupure **22,** par exemple un disjoncteur pour courant continu possédant un état ouvert illustré à la Fig. **2A** et aux **Figs. 3, 4,** et **5A,** dans lequel l'appareil **22** interrompt la circulation dans le circuit électrique **24.** L'appareil de coupure **22** possède aussi un état fermé, illustré sur les **Figs. 2B** à **2D** et **5B** à **5D,** dans lequel il permet la circulation d'un courant électrique dans le circuit électrique considéré.

Selon l'invention, chacune de ces installations électriques **23** comporte un système de résistance variable contrôlée **26** permettant de modifier la valeur de résistance du système de résistance vue par le courant circulant dans le circuit électrique. Ce système de résistance variable contrôlée est inséré électriquement en série dans le circuit principal **24.**

Le système de résistance variable contrôlée **26** comprend un dispositif de résistance **28, 48,** associé à un dispositif de commutation **30, 46** permettant de modifier la valeur de résistance du système de résistance vue par le courant circulant dans le circuit électrique **24.** Bien entendu, il s'agit de la résistance vue par le courant électrique lorsqu'un courant circule dans le circuit principal **24,** ce qui implique notamment que l'appareil de coupure **22** soit dans son état fermé.

L'installation comporte un dispositif de coordination **32** permettant de contrôler des instants de commutation des valeurs de résistance du système de résistance **26** en fonction d'un instant **T0** de fermeture de l'appareil de coupure. Notamment, ce dispositif de coordination **32** contrôle le dispositif de commutation **30, 46** entre différents états. Dans les modes de réalisation dans lesquels l'appareil de coupure **22** est un appareil de type mécanique et dans lequel le dispositif de commutation est lui aussi de type mécanique, le dispositif de coordination **32** peut comprendre un lien mécanique direct entre l'appareil de coupure **22** et le dispositif de commutation **30.** Dans le même cas, le dispositif de coordination peut comprendre un ou plusieurs actionneurs, par exemple de type moteur électrique, vérin hydraulique, ou système à ressort, associé à des moyens de pilotage électrique ou électronique qui commandent le ou les actionneurs, par exemple en fonction de l'état de l'appareil de coupure **22.** Dans certains modes de réalisation, on peut prévoir décalage des ordres sur chaque organe peut être prédéfini une fois pour toute. Les moyens de pilotage électrique ou électronique peuvent comprendre notamment une unité de contrôle électronique conventionnelle, spécifique au système de résistance **26** ou à l'installation **23** ou intégrée à un système électronique plus complet, par exemple une unité électronique pilotant aussi l'appareil de coupure **22** et d'autres éléments du réseau. Cette unité de contrôle électronique peut être informée de l'état de l'appareil de coupure **22** par un capteur. Dans les modes de réalisation dans lesquels l'un ou l'autre, ou les deux, entre l'appareil de coupure **22** et le dispositif de commutation **30,** sont de type électronique, le dispositif de coordination **32** est lui aussi de préférence au moins en partie de type électronique, par exemple sous la forme d'une unité de contrôle électronique conventionnelle, spécifique au système de résistance **26** ou à l'installation **23,** ou intégrée à un système plus complet, par exemple un système de contrôle du réseau dans lequel l'installation **23** est intégrée.

Dans tous les cas, le système de résistance variable contrôlée **26** est conçu pour que ladite valeur de résistance du système, telle que vue par le courant circulant dans le circuit **24,** puissent prendre au moins trois valeurs distinctes, comprenant au moins une valeur supérieure, une valeur inférieure, et au moins une valeur intermédiaire non nulle comprise entre la valeur inférieure et la valeur supérieure.

Comme on le verra par la suite, il est ainsi possible de prévoir que l'appareil de coupure **22** est amené dans son état fermé lorsque le système de résistance variable contrôlée **26** présente une valeur de résistance, vue par le circuit, dite supérieure. À cette valeur supérieure, comme on le verra plus loin, la résistance limite le pic d'intensité de courant dans le circuit principal **24.** Au-delà d'un certain temps, le système de résistance variable contrôlée **26** peut être commuté à une valeur intermédiaire dans laquelle, tout en continuant à limiter le pic d'intensité, le système **26** permet un chargement capacitif plus rapide du circuit principal **24.** Enfin, au-delà d'encore un certain temps, le système de résistance variable contrôlée **26** peut être commuté à une valeur inférieure, qui peut être nulle, pour le fonctionnement nominal de l'installation **23** avec une perte d'énergie la plus faible possible dans le système de résistance variable contrôlée **26.**

Dans certains modes de réalisation, notamment ceux des **Fig. 2A à 4,** le dispositif de résistance **28** comporte au moins deux résistances d'insertion discrètes **R1, R2,** et le dispositif de commutation **30** comporte au moins deux interrupteurs d'insertion distincts **S1, S2,** distincts de l'appareil de coupure mécanique **22.** Les deux interrupteurs d'insertion distincts **S1, S2** présentent chacun un état ouvert d'interruption du courant au travers de l'interrupteur **S1, S2** et un état fermé de passage du courant au travers de l'interrupteur **S1, S2.** Les deux interrupteurs d'insertion distincts **S1, S2** sont chacun associés à une résistance d'insertion discrète **R1, R2** associée respective pour contrôler sélectivement le passage du courant dans la résistance discrète d'insertion associée.

En prenant plus particulièrement l'exemple des **Figs. 2A à 2D,** on voit que le système de résistance variable contrôlée **26** comprend un circuit électrique qui vient s'intercaler électriquement en série dans le circuit principal **24** et qui comporte deux branches électriquement parallèles à savoir une branche de résistance **38** et une branche de commutation **40.** La branche de résistance **38** et la branche de commutation **40** se rejoignent à une extrémité amont et à une extrémité aval qui sont respectivement reliées électriquement à une partie amont et à une partie aval du circuit électrique principal **24.** Dans l'exemple illustré, l'appareil de coupure **22** est agencé dans la portion amont du circuit principal **24** par rapport au système de résistance variable contrôlée **26,** mais une disposition inverse est possible.

Dans le présent texte, les notions « amont » et « aval » sont purement arbitraires et n'impliquent pas nécessairement un sens particulier de circulation du courant électrique dans le circuit principal **24.** Cependant, on pourrait imaginer que la partie amont du circuit principal **24,** encore en amont de l'appareil de coupure **22,** est reliée à, ou comporte, une source de tension, tandis que la partie aval du circuit principal **24,** par rapport au système de résistance variable contrôlée **26,** pourrait être reliée à, ou comporter, un consommateur de courant. Dans certains modes de réalisation, la partie aval du circuit principal **24** comporte une ligne aérienne ou un câble souterrain ou sous-marin de grande longueur, par exemple supérieure à 10 km, voire supérieure à 100 km.

Dans la branche de résistance **38,** on a disposé la première résistance d'insertion discrète **R1** et la deuxième résistance d'insertion discrète **R2.** Ces résistances sont discrètes en ce sens qu'elles sont composées d'un composant résistif ayant une valeur fixe déterminée qui, pour des conditions d'utilisation donnée, n'est pas variable. Elles sont discrètes aussi en ce sens que les deux composants sont distincts.

On remarque qu'une branche de liaison **42** relie électriquement la branche de résistance **38** avec la branche de commutation **40.** La branche de liaison **42** est liée électriquement à la branche de résistance **38** en un point **PR** situé entre la première résistance d'insertion discrète **R1** et la deuxième résistance d'insertion discrète **R2.** Le point **PR** délimite ainsi un tronçon amont par rapport à un tronçon aval de la branche de résistance **38** dans lesquels on trouve respectivement la première résistance d'insertion discrète **R1** et la deuxième résistance d'insertion discrète **R2.** La branche de liaison **42** est liée électriquement à la branche de commutation **40** en un point **PC** qui délimite un tronçon amont par rapport à un tronçon aval de la branche de commutation **40** dans lesquels on trouve respectivement le premier interrupteur d'insertion **S1** et le second interrupteur d'insertion **S2.**

Grâce à cette configuration, on comprend que le premier interrupteur d'insertion **S1** est agencé dans le circuit principal **24** de manière être, dans son état fermé, traversé par le courant de service, et que la première résistance d'insertion discrète **R1** associée est agencée en parallèle de l'interrupteur d'insertion associé **S1,** dans une branche dérivée, ici le tronçon amont de la branche de commutation **40.** De même, le deuxième interrupteur d'insertion **S2** est agencé dans le circuit principal **24** de manière être, dans son état fermé, traversé par le courant de service, et la deuxième résistance d'insertion discrète **R2** associée est agencée électriquement en parallèle de l'interrupteur d'insertion associé **S2,** dans une branche dérivée, ici le tronçon aval de la branche de commutation **40.**

Le premier interrupteur d'insertion **S1** et la première résistance d'insertion discrète **R1** associée forment un premier ensemble résistif commutable, tandis que le deuxième interrupteur d'insertion **S2** et la deuxième résistance d'insertion discrète **R2** associée forment un deuxième ensemble résistif commutable, les deux ensembles étant insérés électriquement en série électriquement l'un par rapport à l'autre dans le circuit principal **24.**

Au total, le premier et le deuxième interrupteurs d'insertion **S1, S2** sont agencés dans le circuit principal **24** de manière être traversés par le courant de service dans leur état fermé, et la première et seconde résistance d'insertion discrètes **R1, R2,** associées respectivement au premier et au deuxième interrupteur d'insertion **S1, S2,** sont agencées chacune respectivement électriquement en parallèle de l'interrupteur d'insertion associé.

Le fonctionnement de ce premier mode de réalisation d'une installation électrique **23** sera maintenant décrit en relation avec les **Figs. 2A à 2D.**

À la **Fig. 2A,** on a illustré un état initial dans lequel l'appareil de coupure **22** est dans son état ouvert. Dans cet état initial, on règle la valeur de résistance du système de résistance **26** à sa valeur supérieure. Pour cela, dans cet exemple de réalisation, le premier et le deuxième interrupteurs d'insertion **S1, S2** sont commutés dans un état ouvert ce qui, de par leur agencement électriquement en parallèle de la résistance d'insertion discrète associée **R1, R2,** impose que tout courant électrique traversant le système de résistance variable contrôlée **26** doit passer par les deux résistances d'insertion discrètes **R1, R2** qui sont placées électriquement en série dans la branche de résistance **38.** Dans cette configuration, la valeur de résistance **RSysEqSup** du système de résistance variable contrôlée **26** est donc égale à la somme R1+R2 des valeurs de résistance des deux résistances d'insertion discrètes **R1** et **R2**. On remarque ici que, dans ce mode de réalisation, la commutation des deux interrupteurs d'insertion **S1, S2** dans leur état ouvert se fait en l'absence de courant dans le circuit principal **24** puisque l'appareil de coupure **22** est dans un état ouvert. Ces deux interrupteurs d'insertion **S1, S2** n'ont donc pas besoin d'avoir une capacité particulière d'interruption d'un courant de court-circuit, contrairement à un disjoncteur.

La **Fig. 2B** illustre un instant **T0** de fermeture de l'appareil de coupure **22** dans lequel celui-ci bascule de son état ouvert à son état fermé permettant d'établir une circulation de courant électrique dans le circuit électrique principal. Le système de résistance variable contrôlée **26** reste dans la configuration décrite ci-dessus dans laquelle il présente sa valeur de résistance supérieure **RSysEqSup,** ici égale à R1+R2, cette valeur de résistance supérieure **RSysEqSup** étant celle qui est vue par le courant électrique circulant dans le circuit électrique principal **24** puisque le système de résistance variable contrôlée **26** est agencé électriquement en série avec l'appareil de coupure **22** dans le circuit électrique principal **24**. De la sorte, cette valeur de résistance supérieure **RSysEqSup,** ici égale à R1+R2 limite le pic d'intensité de courant lors de l'établissement de la circulation du courant dans le circuit principal **24**.

A l'expiration d'un premier délai **T1** suivant l'instant de fermeture **T0** de l'appareil de coupure **22**, il est possible de commuter le système de résistance variable contrôlée pour que celui-ci adopte une valeur de résistance intermédiaire **RSysEq(1),** tel que cela est illustré à la Fig. 7. Ce premier délai **T1** est variable en fonction de l'installation et des caractéristiques électriques du réseau dans lequel l'installation est insérée, mais sera généralement inférieur à une seconde, par exemple compris entre 1 ms et 100 ms. Dans le premier exemple illustré, la commutation du système de résistance variable contrôlée **26** se fait par commutation du dispositif de commutation **30,** en l'occurrence par la commutation de l'un des deux interrupteurs d'insertion **S1, S2** de son état ouvert à son état fermé. Dans l'exemple illustré à la **Fig. 2C,** c'est le premier interrupteur d'insertion **S1** qui est commuté vers son état fermé, le deuxième interrupteur d'insertion **S2** étant maintenu dans son état ouvert. On pourrait choisir, au contraire, de commuter le deuxième interrupteur d'insertion **S2** vers son état fermé, en conservant le premier interrupteur d'insertion **S1** dans son état ouvert. Par cette commutation du dispositif de commutation **30,** la résistance d'insertion discrète associée à l'interrupteur d'insertion qui est fermé, en l'occurrence la première résistance d'insertion **R1,** se trouve court-circuitée. En effet, le courant électrique dans le circuit principal **24** tend à circuler dans le tronçon amont de la branche de commutation **40,** au travers du premier interrupteur d'insertion **S1,** et par la branche de liaison **42** pour poursuivre sa circulation dans le tronçon aval de la branche de résistance **38,** au travers de la deuxième résistance d'insertion discrète **R2**. On comprend donc que, dans cet état du système de résistance variable contrôlée **26,** la valeur de résistance du système **26** qui est vue par le courant électrique circulant dans le circuit principal **24** est une valeur intermédiaire **RSysEq(1)** qui est égale à la valeur R2. Cette valeur intermédiaire est moindre que la valeur supérieure R1+R2 correspondant à l'état du système illustré à la **Fig. 2B.** Cette valeur intermédiaire est non nulle.

Après l'expiration du premier délai **T1** suivant l'instant de fermeture de l'appareil de coupure **22,** il est possible de commuter de nouveau le système de résistance variable contrôlée pour que celui-ci adopte, à l'expiration d'un deuxième délai **T2** suivant l'instant de fermeture **T0** de l'appareil de coupure, une valeur de résistance inférieure. Ce deuxième délai **T2,** calculé à compter de l'instant de fermeture **T0,** est variable en fonction de l'installation et des caractéristiques électriques du réseau dans lequel l'installation **23** est insérée, mais sera généralement inférieur à une seconde, par exemple compris entre 1 ms et 100 ms, tout en étant bien entendu supérieur au premier délai **T1**. La commutation du système de résistance variable contrôlée **26** se fait par commutation du dispositif de commutation **30,** en l'occurrence par la commutation du deuxième interrupteur d'insertion **S2** de son état ouvert à son état fermé comme illustré à la **Fig. 2D.** Par cette commutation du dispositif de commutation **30,** la deuxième résistance d'insertion discrète associée se trouve elle aussi court-circuitée, toutes les résistances d'insertion discrètes **S1, S2** étant ainsi court-circuitées. En effet, le courant électrique dans le circuit principal **24** tend à circuler uniquement dans la branche de commutation **40,** au travers du premier et du deuxième interrupteurs d'insertion **S1, S2**. Aucun courant, ou un courant négligeable, ne circule dans la branche de résistance **38,** donc au travers de la première et de la deuxième résistance d'insertion discrètes **R1, R2.** On comprend donc que, dans cet état du système de résistance variable contrôlée **26,** la valeur de résistance du système **26** qui est vue par le courant électrique circulant dans le circuit principal **24** est une valeur inférieure. Cette valeur inférieure **RSysEqInf** est moindre que la valeur intermédiaire R2 correspondant à l'état du système illustré à la **Fig. 2C.** Dans l'exemple illustré, cette valeur inférieure **RSysEqInf** correspond à la résistance de la branche de commutation **40.** Cette valeur inférieure est de préférence nulle ou négligeable.

Des simulations ont été effectuées pour une installation du type de celle illustrée aux **Figs. 2A** à **2D,** pour un réseau à haute tension continue nominale de 320 kV DC dans lequel on prévoit la circulation d'un courant électrique sous une intensité nominale maximale de 1500 A. On s'est placé dans l'hypothèse où le circuit principal **24** présente (hors tout système de résistance variable contrôlée) une impédance équivalente de 8 Ohms et une capacité équivalente de 108 microfarads. En l'absence de tout système de limitation du courant d'appel, les simulations montrent que, lors de la fermeture de l'appareil de coupure **22,** on pourrait avoir un pic de courant d'appel dépassant 40 000 ampères.

Dans l'installation équipée d'un système de résistance variable contrôlée **26** telle qu'illustrée aux **Figs. 2A** à **2D,** les simulations montrent qu'on parvient à limiter la valeur du pic d'intensité pendant la période d'établissement du courant à une valeur désirée de 2700 ampères, soit moins du double de l'intensité nominale maximale du réseau, ce pic d'intensité étant très bref et étant donc supportable par le réseau, en choisissant les valeurs suivantes :

| | |
|---|---|
| R1 | 75.2 Ohms |
| R2 | 35.5 Ohms |
| T1 | 12 ms |
| T2 | 18.5 ms |

Par de simples opérations d'adaptation, l'homme du métier pourra faire varier les valeurs de résistance **R1** et **R2** et les délais **T1** et **T2** pour trouver des valeurs optimales dépendant notamment de l'installation et du réseau dans lequel elle est insérée.

De manière plus générale, on peut dimensionner un système de résistance variable contrôlée pour atteindre une valeur désirée du pic d'intensité pendant la période d'établissement du courant, en résolvant les équations suivantes :

| | |
|---|---|
| Tension du réseau | $U_{dc}$ |
| Courant de pic maximal désiré | $I_{des}$ |
| Capacité équivalente du circuit principal, incluant tout réseau connecté au circuit principal | $C_{eq}$ |
| Impédance d'onde équivalente du circuit principal incluant tout réseau connecté au circuit principal (hors système de résistance variable contrôlée) | $Z_{eq}$ |
| Résistance totale insérée | $Rtot = RSysEqSup = R1 + R2$ $= \dfrac{U_{dc}}{I_{des}} - Z_{eq}$ |
| Constante de charge du circuit principal incluant tout réseau connecté au circuit principal, après insertion de *RSysEqSup* | $\tau_1$ = Rtot * Ceq |
| Premier délai de commutation **T1** | *T1 peut être choisi pour minimiser T2* |
| **R2** | $R2 = \dfrac{U_{dc}}{I_{des}}.e^{\frac{T1}{\tau_1}} - Z_{eq}$ |
| **R1** | R1 = Rtot - R2 |
| Deuxième délai de commutation **T2** | $T2 = -ln\left(\dfrac{Z_{eq}.I_{des}}{U_{dc}.e^{\frac{-T1}{\tau_1}}}\right).R2.C_{eq} + T1$ |

Concernant le paramètre T1, la règle d'optimisation est de minimiser la fonction T2 en fonction de T1, c'est-à-dire de déterminer une valeur de T1 pour laquelle la dérivée de la fonction T2 en fonction de T1 est nulle (dT2/dT1=O). Cependant, le choix de T1 n'est pas critique car dans les configurations habituelles, en maintenant T1 dans une plage comprise entre 0,2 x T2 et 0,95 x T2, on observe une variation de T2 inférieure à 20% de la valeur minimale de T2, c'est-à-dire que T2 reste compris entre une valeur minimale T2min et 1,2 T2min.

On a illustré sur la **Fig. 3** une variante de réalisation du premier mode de l'invention dans lequel, au lieu d'avoir, comme dans l'exemple précédent, deux ensembles résistifs commutables constitués chacun d'une résistance d'insertion discrète **R1, R2** associée électriquement en parallèle avec un interrupteur d'insertion associé **S1, S2,** les deux ensembles étant agencés électriquement en série dans le circuit principal **24,** le système de résistance variable contrôlée **26** comporte trois ensembles résistifs commutables constitués chacun d'une résistance d'insertion discrète **R1, R2, R3** associée électriquement en parallèle avec un interrupteur d'insertion associé **S1, S2, S3,** les trois ensembles étant agencés électriquement en série dans le circuit principal **24.** Le fonctionnement de ce système de résistance variable contrôlée se déduit directement du fonctionnement décrit pour le premier mode de réalisation, en prévoyant un troisième délai correspondant à la commutation du troisième interrupteur d'insertion **S3** de son état ouvert vers son état fermé.

Dans l'installation équipée d'un système de résistance variable contrôlée **26** telle qu'illustré à la **Fig. 3,** avec les mêmes hypothèses que précédemment, les simulations montrent qu'on parvient à limiter la valeur du pic d'intensité pendant la période d'établissement du courant à une valeur désirée de 2700 ampères, en choisissant les valeurs suivantes :

| R1 | 52.5 Ohms |
|----|-----------|
| R2 | 37.3 Ohms |
| R3 | 21 Ohms   |

| T1 | 7 ms    |
|----|---------|
| T2 | 12.5 ms |
| T3 | 15 ms   |

On voit ainsi que le temps d'établissement du courant nominal dans le circuit est ici de 15 ms, soit un peu plus rapide que le temps de 18,5 ms obtenu dans le précédent mode de réalisation, et très proche du temps minimal possible compte tenu des caractéristiques du réseau, dans l'hypothèse retenue, de 11,9 ms.

Bien entendu, on peut encore réduire le temps total d'établissement du courant nominal, pour le même pic de courant autorisé, en augmentant le nombre de résistances d'insertion et d'interrupteur d'insertion associés.

On illustre ainsi à la **Fig. 4** un système de résistance variable contrôlée **26** comportant N résistances d'insertion discrètes **R1, R2, R3,** ..., **RN** et N interrupteurs d'insertion associés **S1, S2, S3, ...SN,** dans la même disposition qu'illustré précédemment, N représentant un nombre entier supérieur à 3.

Dans les deux premières variantes de réalisation dans l'invention illustrées aux **Figs. 2A** à **3,** on comprend qu'il est possible d'utiliser des interrupteurs d'insertion mécaniques.

Toutefois, y compris dans ces variantes de réalisation, les interrupteurs d'insertion peuvent comprendre des interrupteurs électroniques, par exemple de type thyristor, TRIAC, MOSFET, IGBT etc.... Une telle solution sera privilégiée pour un système de résistance variable contrôlée **26** tel que celui de la **Fig. 4** comportant un nombre important d'interrupteurs d'insertion, notamment plus de 3 interrupteurs d'insertion.

La commutation d'un ou plusieurs ou de tous les interrupteurs d'insertion peut être commandée mécaniquement, par exemple par un déplacement d'au moins un organe de l'appareil de coupure mécanique. En variante, la commutation d'un ou plusieurs ou de tous interrupteurs d'insertion peut être commandée électroniquement.

Dans les variantes de réalisations décrites aux **Figs. 3** et **4,** le système de résistance variable contrôlée **26** présente une valeur de résistance qui, en fonction du réglage, peut prendre au moins deux valeurs intermédiaires non nulles distinctes comprises entre la valeur inférieure et la valeur supérieure.

Toutefois, dans ces exemples, les valeurs de résistance intermédiaires sont des valeurs discrètes entre la valeur supérieure et la valeur inférieure.

Dans l'exemple de réalisation des **Figs. 5A** à **5D,** non compris dans l'invention on prévoit un système de résistance variable contrôlée **26** dont la valeur de résistance, vue par un courant électrique circulant dans le circuit électrique principal, peut varier de manière continue ou quasi continue entre la valeur supérieure et la valeur inférieure. Ainsi, le système de résistance variable contrôlée **26** peut être réalisé sous la forme d'un rhéostat. À la **Fig. 5A,** on a illustré un rhéostat **44** agencé dans le circuit principal **24** en aval de l'appareil de coupure **22.** Par exemple, un curseur mobile **46** de commutation du rhéostat **44** est lié électriquement à une borne aval **25** de l'appareil de coupure **22** tandis qu'un élément résistif allongé **48** du rhéostat **44** est relié, par une extrémité aval **50,** à la partie aval du circuit électrique principal **24.** Chaque déplacement du curseur de commutation **46** correspond à une commutation de la valeur de résistance du rhéostat **44.**

Dans l'état initial illustré à la **Fig. 5A,** dans lequel l'appareil de coupure **22** est encore dans son état ouvert, le curseur **46** est placé de manière à régler la valeur de résistance du rhéostat à une valeur supérieure. Dans cette configuration, on ferme l'appareil de coupure **22,** à un instant **T0** de fermeture. À partir de là, on peut faire varier la valeur de résistance du rhéostat **44** en déplaçant progressivement le curseur jusqu'à un instant **T2,** illustré à la figure **5D,** auquel la valeur de résistance du rhéostat **44** est une valeur inférieure. Entre ces deux instants, la valeur de résistance du rhéostat **44** est modifiée de manière continue ou quasi continue de telle sorte que, par exemple à un instant **T1** illustré à la figure **5C,** la valeur de résistance du rhéostat **44,** vue par le courant électrique circulant dans le circuit principal **24,** vaut une valeur intermédiaire comprise entre la valeur supérieure et la valeur inférieure. Le déplacement du curseur **46** est contrôlé par le dispositif de coordination **32** de l'installation. La vitesse de déplacement du curseur **46,** et donc la variation de la valeur de résistance du système de résistance variable contrôlée **26,** peut être constante ou peut être variable. Le déplacement du curseur **46** peut comprendre des paliers au cours desquels le déplacement est interrompu, donc au cours desquels la valeur de résistance demeure figée pendant un certain temps. Le rhéostat peut être un rhéostat linéaire dans lequel l'élément résistif **48** est allongé selon une direction rectiligne ou un rhéostat rotatif dans lequel l'élément résistif **48** est allongé selon une courbe.

On a illustré sur la **Fig. 6** un système de résistance variable contrôlée **26,** non compris dans l'invention, qui présente :

- un premier interrupteur d'insertion **S1** et une première résistance d'insertion **R1** associés qui sont agencés électriquement en série dans une même première branche dérivée **51** du circuit électrique ;
- un second interrupteur d'insertion **S2** et une seconde résistance d'insertion **R2** associés qui sont agencés électriquement en série dans une même seconde branche dérivée du circuit électrique, en dérivation du circuit électrique principal.

La première branche dérivée **51** et la seconde branche dérivée **52** sont agencées électriquement en parallèle l'une de l'autre et les deux branches sont agencées en électriquement en parallèle de l'appareil de coupure **22.**

Les résistances d'insertion **R1, R2** en parallèle forment un dispositif de résistance du système de résistance variable contrôlée **26,** tandis que les interrupteurs d'insertion **S1** et **S2** forment un dispositif de commutation du système de résistance variable contrôlée **26.**

En fonctionnement normal, l'appareil de coupure **22** est fermé et les deux interrupteurs **S1, S2** agencés électriquement en parallèle sont ouverts.

Lors de l'ouverture de l'appareil de coupure **22,** les interrupteurs d'insertion **S1** et **S2** et les résistances d'insertion **R1, R2** du système de résistance variable contrôlée **26** n'interfèrent pas.

Lors du ré-enclenchement, on commence par fermer, à un instant **T'0,** par exemple le premier interrupteur d'insertion **S1** associé à la résistance **R1.** On note que la résistance **R1** représente alors la valeur de résistance supérieure vue par le courant principal. On obtient ainsi simultanément le réglage de la valeur de résistance du système de résistance à résistance variable contrôlée à une valeur supérieure, et l'établissement de la circulation d'un courant électrique au travers du système de résistance à résistance variable contrôlée.

A l'expiration d'un premier délai, à un instant **T'1,** on ferme le second interrupteur d'insertion **S2.** Les deux résistances d'insertion **R1** et **R2** parallèles ont une résistance équivalente intermédiaire. On obtient ainsi la modification de la valeur de résistance du système de résistance **26** à une valeur intermédiaire.

Puis, à l'expiration d'un deuxième délai, à un instant **T'2,** on ferme l'appareil de coupure **22,** ce qui a pour effet de court-circuiter les résistances d'insertion **R1, R2** du système de résistance variable contrôlée **26,** lequel présente alors une valeur de résistance minimale pour le courant circulant de le circuit principal **24.**

On note que, contrairement aux modes de réalisation précédents, les instants de commutation **T'0** et **T'1** des interrupteurs **S1** et **S2** du système de résistance variable contrôlée **26** sont antérieurs à l'instant **T'2** de fermeture de l'appareil de coupure **22** de son état ouvert à son état fermé

Ensuite, on peut rouvrir les deux interrupteurs d'insertion **S1** et **S2** du système de résistance variable contrôlée **26** pour qu'ils soient prêts pour une opération ultérieure. Ces ouvertures se font sans courant puisque la puissance électrique transite au travers de l'appareil de coupure **22.**

Bien entendu, de manière analogue au mode de réalisation de la **Fig. 3,** on pourrait prévoir plus de deux branches dérivées, par exemple trois branches dérivées, comportant chacune un interrupteur et une résistance associés agencés électriquement en série, les branches dérivées étant agencées électriquement en parallèle l'une de l'autre et les branches étant agencées en électriquement en parallèle de l'appareil de coupure **22,** pour déterminer au moins deux valeurs intermédiaires non nulles distinctes comprises entre la valeur inférieure et la valeur supérieure. De même, de manière analogue au mode de réalisation de la **Fig. 4,** les interrupteurs d'insertion dans le mode de réalisation de la **Fig. 6** peuvent comprendre des interrupteurs électroniques, par exemple de type thyristor, TRIAC, MOSFET, IGBT etc....

Dans les exemples illustrés, la valeur inférieure de la valeur de résistance du système de résistance variable contrôlée **26** est une valeur de résistance nulle ou pouvant être considéré comme telle. Cependant, dans certains modes de réalisation, on peut prévoir que cette valeur inférieure soit non nulle.

De manière plus générale, avec un système de résistance variable contrôlée permettant d'obtenir (k-1) valeurs intermédiaires de résistance, k étant un nombre entier supérieur ou égal à 2, comprises entre une valeur supérieure **RSysEqSup** et une valeur inférieure **RSysEqInf,** distinctes entre elles et distinctes de la valeur supérieure **RSysEqSup** et de la valeur inférieure **RSysEqInf,** le procédé comporte :

- le réglage d'une valeur de résistance d'un système de résistance à résistance variable contrôlée **26,** vue par le courant circulant dans le circuit électrique, à la valeur supérieure **RSysEqSup** ;
- l'établissement **T0, T'0** d'une circulation électrique dans le circuit électrique haute tension continue **24** au travers du système de résistance à résistance variable contrôlée **26** ;
- la modification de la valeur de résistance du système de résistance **26** pour atteindre, à l'expiration d'un (i)ème délai **T(i)-T0** suivant l'établissement de la circulation électrique, une valeur intermédiaire **RSysEq(i+1)** ;
- puis la modification de la valeur de résistance du système de résistance **26** pour atteindre, à l'expiration d'un (k)ème délai **T(k)-T0** suivant l'établissement de la circulation électrique, une valeur inférieure

**RSysEqInf.**

De préférence, le système est configuré, par exemple par un choix adapté des composants résistifs, pour que la valeur supérieure de résistance **RSysEqSup** du système de résistance, vue par le courant circulant dans le circuit électrique, soit égale ou supérieure au quotient de la tension du réseau **Udc** par le courant de pic maximal désiré **Ides,** quotient auquel on retire la valeur d'impédance d'onde équivalente **Zeq** du circuit électrique **24** dans lequel on veut rétablir le courant, incluant tout réseau connecté au circuit principal mais hors le système de résistance variable contrôlée, selon la formule suivante :

$$RSysEqSup = \frac{Udc}{Ides} - Zeq$$

Ce choix permet de limiter le courant dans le circuit principal **24** à la valeur désirée **Ides.** Cette valeur est par exemple choisie pour correspondre à un certain pourcentage, (inférieur à 100), de la valeur de courant de blocage des IGBTs de convertisseurs présents dans le réseau.

De manière général, dans certains modes de réalisation, la valeur de résistance du système de résistance à résistance variable contrôlée **26** est contrôlée pour prendre une succession de valeurs discrètes **RSysEq(i)** décroissantes. On note que lorsque le système à résistance variable contrôlée **26** est réalisé sous la forme d'un rhéostat, on peut généralement considérer que le rhéostat détermine un nombre important de valeurs discrètes successives.

De même, les inventeurs ont déterminé que le système devait de préférence être contrôlé pour assurer une certaine durée d'insertion pour une valeur donnée de la valeur de résistance du système de résistance à résistance variable contrôlée **26.** Une telle durée d'insertion d'une valeur intermédiaire **RSysEq(i),** est la durée pendant laquelle la valeur de résistance du système de résistance à résistance variable contrôlée **26** est contrôlée pour prendre ladite valeur intermédiaire discrète **RSysEq(i).** On note alors **T(i-1)** l'instant auquel le système de résistance à résistance variable contrôlée **26** est contrôlé pour prendre ladite valeur intermédiaire **RSysEq(i),** et **T(i)** l'instant auquel le système de résistance à résistance variable contrôlée **26** est contrôlé pour passer de ladite valeur intermédiaire **RSysEq(i)** à la valeur de résistance suivante **RSysEq(i+1).** La valeur de résistance suivante **RSysEq(i+1)** est la valeur de résistance suivante dans l'ordre de succession des valeurs de résistance discrètes du système de résistance à résistance variable contrôlée **26,** vue par le courant circulant dans le circuit électrique. La durée d'insertion est donc alors la durée **T(i)-T(i-1).** On note que, en prenant la convention que l'instant **T0** ou **T'0** d'établissement d'une circulation électrique dans le circuit électrique haute tension continue **(24)** constitue l'origine des temps, avec T0=0 ; la valeur de l'instant **T(i)** auquel le système de résistance à résistance variable contrôlée **26** est contrôlé pour passer de ladite valeur intermédiaire **RSysEq(i)** à la valeur de résistance suivante **RSysEq(i+1)** est égal au délai écoulé suivant l'établissement de la circulation électrique.

Il a donc été déterminé que la durée d'insertion devait être de préférence égale ou supérieure à :

$$-ln\left(\frac{RSysEq(i+1) + Zeq}{RSysEq(i) + Zeq}\right).RSysEq(i).Ceq$$

où **Ceq** et **Zeq** sont respectivement la capacité équivalente et la valeur d'impédance d'onde équivalente du circuit électrique **24** dans lequel on veut rétablir le courant, incluant tout réseau connecté au circuit principal, hors toute influence du système de résistance à résistance variable contrôlée **26. Ceq** et **Zeq** résultent notamment de la topologie du circuit princpal **24,** comprenant le réseau qui lui est connecté, et notamment des caractéristiques propres des lignes utilisées dans cette topologie. Selon la complexité de la topologie en question, les grandeurs **Ceq** et **Zeq** peuvent être déduites analytiquement, par simulation numérique ou par mesures expérimentales des valeurs de courant et de tension dans le circuit électrique **24** lors de l'établissement d'un courant référence.

Le paramètre **Zeq** peut être déterminé à partir de la tension du réseau **Udc** et le courant d'appel sans la

**12**

présence du système de résistance variable contrôlé, alors que le paramètre **Ceq** peut être déterminé à partir de l'évolution exponentielle du courant établi suite à la fermeture de l'appareil de coupure sur une résistance quelconque placée en série avec l'appareil de coupure.

Bien entendu, cette formule donne une valeur minimale de la durée d'insertion, valable pour une série prédéfinie de valeurs **(RSysEqSup, RSysEq(i), RSysEqSup)** de résistance du système de résistance à résistance variable contrôlée **26,** pour permettre un rétablissement rapide du courant dans le circuit principal **24** sans dépasser la valeur de pic de courant **Ides.** En pratique, on aura intérêt à prévoir une valeur supérieure, par exemple comprise dans la gamme allant de 1 fois à 1,5 fois la valeur donnée par la formule ci-dessus, ceci dans le but de garantir le respect de la limitation du courant à la valeur désirée **Ides,** en dépit par exemple d'incertitudes quant aux valeurs de résistance, de capacité, ou de temps de réponse des éléments dans le circuit principal **24.**

Il est possible de choisir ou de déterminer une série optimisée de valeurs de résistance **(RSysEqSup, RSysEq(i), RSysEqInf)** du système de résistance à résistance variable contrôlée **26,** pour encore mieux optimiser le temps total nécessaire au rétablissement du courant, c'est à-dire le délai **Tk-T0** qui s'étend de l'instant **T0, T'0** d'établissement d'une circulation électrique dans le circuit électrique haute tension continue **24** jusqu'à l'instant **Tk** pour lequel la valeur de résistance du système de résistance **26** atteint la valeur inférieure **RSysEqInf.**

On peut ainsi déterminer une telle série optimisée de valeurs de résistance du système de résistance à résistance variable contrôlée **26** en mettant en œuvre des méthodes conventionnelles d'optimisation notamment des méthodes de calcul itératif. Par exemple, les paramètres que l'on peut faire varier itérativement peuvent être :

- une première durée d'insertion **T1,** pour une valeur de résistance du système **26,** par exemple la valeur supérieure **RSysEqSup,** en la faisant varier de la valeur 0 jusqu'à la valeur maximale que peut prendre une durée d'insertion ;
- les valeurs de résistances du système de résistance **RSysEq(1)** à **RSysEq(k),** variant chacune de la valeur 0 jusqu'à la valeur maximale que peut prendre une résistance.

Avec de telles itérations, on peut alors calculer, itérativement

- la deuxième valeur intermédiaire **RSysEq(2)** du système de résistance **(26)** ;
- Les autres durées d'insertion **T(i)-T(i-1).**

Par ces itérations, et par mise en œuvre d'une fonction de minimisation on recherche de la valeur minimale de la durée totale d'insertion **Tk-T0.**

Bien entendu, d'autres méthodes de calcul d'optimisation peuvent être utilisées. En pratique, quelques tests réels ou en simulation peuvent suffire pour déterminer une série optimisée, sinon absolument optimale.

L'invention n'est pas limitée aux exemples décrits et représentés car diverses modifications peuvent y être apportées sans sortir de son cadre tel que défini par les revendications.

## Revendications

**1.** Installation électrique haute tension continue comprenant un appareil de coupure **(22)** d'un circuit électrique haute tension continue, du type comprenant un circuit principal **(24)** dans lequel circule un courant électrique de service sous haute tension continue lors d'un régime de fonctionnement établi de l'installation, l'appareil de coupure **(22)** étant susceptible de basculer d'un état ouvert dans lequel il interrompt la circulation d'un courant électrique dans le circuit principal **(24)** et à un état fermé dans lequel il permet la circulation d'un courant électrique dans le circuit principal **(24),** du type dans lequel l'installation **(23)** comporte un système de résistance variable contrôlée **(26)** comprenant un dispositif de résistance **(28, 48)** associé à un dispositif de commutation **(30, 46)** permettant de modifier la valeur de résistance du système de résistance **(26)** vue par le courant circulant dans le circuit électrique principal **(24),** ladite valeur de résistance prenant au moins trois valeurs distinctes, comprenant au moins une valeur supérieure, une valeur inférieure, et au moins une valeur intermédiaire non nulle comprise entre la valeur inférieure et la valeur supérieure, et l'installation comportant un dispositif de coordination **(32)** permettant de contrôler des instants **(T1, T2, T'0, T'1)** de commutation des valeurs de résistance du système de résistance **(26)** en fonction d'un instant **(T0, T'2)** de fermeture de l'appareil de coupure **(22)** de son état ouvert à son état fermé, le dispositif de résistance **(28)** comportant au moins deux résistances d'insertion discrètes **(R1, R2, R3, ..., RN), caractérisée en ce que** le dispositif de commutation **(30)** comporte au moins deux interrupteurs d'insertion distincts **(S1, S2, S3,... ,SN),** distincts de l'appareil de coupure **(22),** qui présentent chacun un état ouvert d'interruption du courant au travers de l'interrupteur et un état fermé de passage du courant au travers de l'interrupteur, et qui sont chacun associés à une résistance d'insertion discrète associée respective **(R1, R2, R3, ..., RN)** pour contrôler sélectivement le passage du courant dans la résistance d'insertion discrète associée **(R1, R2, R3, ..., RN),** et **en ce qu'**au moins un interrupteur d'insertion (**S1**, **S2, S3,..., SN**) est agencé dans le circuit principal **(24)** de manière à être, dans son état fermé, traversé par le courant de service, et **en ce que** la résistance d'insertion discrète (**R1**, **R2, R3, ..., RN**) associée est agencée dans le circuit principal **(24)** électriquement en parallèle de l'interrupteur d'insertion associé.

2.  Installation électrique selon la revendication **1, caractérisée en ce qu'**un premier (**S1**) et un deuxième (**S2**) interrupteurs d'insertion sont agencés dans le circuit principal **(24)** de manière être traversés par le courant de service dans leur état fermé, et **en ce qu'**une première (**R1**) et une seconde (**R2**) résistance d'insertion discrètes, associées respectivement au premier (**S1**) et au deuxième (**S2**) interrupteur d'insertion, sont agencées chacune respectivement électriquement en parallèle de l'interrupteur d'insertion associé.

3.  Installation électrique selon la revendication **1** ou **2, caractérisée en ce que** l'installation **(23)** comporte un système de résistance variable contrôlée **(26)** pour lequel ladite valeur de résistance prend au moins deux valeurs intermédiaires non nulles distinctes comprises entre la valeur inférieure et la valeur supérieure.

4.  Installation électrique selon la revendication **3, caractérisée en ce que** le système de résistance variable contrôlée **(26)** comportant N résistances d'insertion discrètes (**R1**, **R2, R3, ..., RN)** et N interrupteurs d'insertion associés (**S1**, **S2, S3, ...SN),** chaque résistance d'insertion discrète (**R1**, **R2, R3, ..., RN)** associée étant agencée dans le circuit principal **(24)** électriquement en parallèle de l'interrupteur d'insertion associé, et N représentant un nombre entier supérieur à 3.

5.  Installation électrique selon la revendication 4, **caractérisée en ce que** le système de résistance variable contrôlée **(26)** présente une valeur de résistance qui, en fonction du réglage, peut prendre au moins deux valeurs intermédiaires non nulles distinctes comprises entre la valeur inférieure et la valeur supérieure.

6.  Installation électrique selon l'une des revendications **1** à **5, caractérisée en ce qu'**au moins un interrupteur d'insertion (**S1**, **S2, S3, ..., SN**) est mécanique.

7.  Installation électrique selon l'une des revendications **1** à **6, caractérisée en ce qu'**au moins un interrupteur d'insertion (**S1**, **S2, S3, ..., SN**) est électronique.

8.  Installation électrique selon l'une des revendications **1** à **7, caractérisée en ce qu'**au moins un interrupteur d'insertion (**S1**, **S2, S3, ..., SN**) est commandé mécaniquement par un déplacement d'au moins un organe de l'appareil de coupure **(22).**

9.  Installation électrique selon l'une des revendications **1** à **8, caractérisée en ce qu'**au moins un interrupteur d'insertion (**S1**, **S2, S3, ..., SN)** est commandé électroniquement.

10. Installation électrique selon l'une des revendications précédente, **caractérisée en ce que** le dispositif de coordination comporte une unité électronique de commande.

11. Installation électrique selon l'une des revendications précédentes, **caractérisée en ce que** l'appareil de coupure **(22)** est un disjoncteur.

12. Installation électrique selon l'une des revendications précédentes, **caractérisée en ce que** la valeur supérieure de résistance **(RSysEqSup)** du système de résistance **(26),** vue par le courant circulant dans le circuit principal **(24),** est égale ou supérieure au quotient de la tension du réseau (Udc) par le courant de pic maximal désiré (Ides), quotient auquel on retire la valeur d'impédance d'onde équivalente (Zeq) du circuit électrique **(24)** hors système de résistance variable contrôlée :

$$ RSysEqSup = \frac{Udc}{Ides} - Zeq $$

13. Installation électrique selon l'une des revendications précédentes, **caractérisée en ce que** la valeur de résistance du système de résistance à résistance variable contrôlée **(26)** est contrôlée pour prendre une succession de valeurs discrètes **(RSysEq(i))** décroissantes, et en ce le dispositif de commutation **(30, 46)** est configuré pour qu'une durée d'insertion ($Ti$ - $T(i$ -1)) d'une valeur intermédiaire **(RSysEq(i)),** pendant laquelle la valeur de résistance du système de résistance à résistance variable contrôlée **(26)** est contrôlée pour prendre ladite valeur intermédiaire discrète **(RSysEq(i)),** est égale ou supérieure à :

$$-ln\left(\frac{RSysEq(i+1)+Zeq}{RSysEq(i)+Zeq}\right).RSysEq(i).Ceq$$

Où :

- **RSysEq(i)** est une valeur intermédiaire de résistance du système de résistance à résistance variable contrôlée **(26),** vue par le courant circulant dans le circuit électrique ;
- **T(i-1)** est l'instant auquel le système de résistance à résistance variable contrôlée **(26)** est contrôlé pour prendre ladite valeur intermédiaire **(RSysEq(i))** ;
- **RSysEq(i+1)** est une valeur de résistance suivante dans l'ordre de succession des valeurs de résistance discrètes du système de résistance à résistance variable contrôlée **(26),** vue par le courant circulant dans le circuit électrique ;
- **T(i)** est l'instant auquel le système de résistance à résistance variable contrôlée **(26)** est contrôlé pour passe de ladite valeur intermédiaire **(RSysEq(i))** à la valeur de résistance suivante **(RSysEq(i+1))** ;
- Zeq est la valeur d'impédance d'onde équivalente du circuit électrique **(24)** incluant tout réseau connecté au circuit principal mais hors système de résistance variable contrôlée ;
- Ceq est la capacité équivalente du circuit électrique **(24),** incluant tout réseau connecté au circuit principal.

**Patentansprüche**

1. Elektrische Gleichstrom-Hochspannungsanlage, umfassend eine Unterbrechungsvorrichtung (22) eines elektrischen Gleichstrom-Hochspannungskreises, von dem Typ, der einen Hauptkreis (24) umfasst, in welchem während eines festgelegten Betriebsschemas der Anlage ein elektrischer Betriebsstrom unter hoher Gleichspannung fließt, wobei die Unterbrechungsvorrichtung (22) aus einem offenen Zustand, in welchem sie das Fließen eines elektrischen Stroms in dem Hauptkreis (24) unterbricht, und in einen geschlossenen Zustand, in welchem sie das Fließen eines elektrischen Stroms in dem Hauptkreis (24) erlaubt, umschaltbar ist, von dem Typ, bei welchem die Anlage (23) ein System mit geregeltem variablem Widerstand (26) beinhaltet, umfassend eine Widerstandseinrichtung (28, 48), die einer Schalteinrichtung (30, 46) zugeordnet ist und es erlaubt, den Widerstandswert des Widerstandssystems (26) gegenüber dem in dem elektrischen Hauptkreis (24) fließenden Strom zu modifizieren, wobei der Widerstandswert zumindest drei unterschiedliche Werte annimmt, umfassend zumindest einen oberen Wert, einen unteren Wert und zumindest einen Zwischenwert ungleich null, der zwischen dem unteren Wert und dem oberen Wert liegt, und wobei die Anlage eine Koordinierungseinrichtung (32) beinhaltet, die es erlaubt, Schaltzeitpunkte (T1, T2, T'0, T'1) für die Widerstandswerte des Widerstandssystems (26) als Funktion eines Zeitpunkts (T0, T'2) der Schließung der Unterbrechungsvorrichtung (22) aus ihrem offenen Zustand in ihren geschlossenen Zustand zu steuern, wobei die Widerstandseinrichtung (28) zumindest zwei diskrete Einfügewiderstände (R1, R2, R3, ..., RN) beinhaltet, **dadurch gekennzeichnet, dass** die Schalteinrichtung (30) zumindest zwei unterschiedliche Einfügeunterbrecher (S1, S2, S3,... ,SN) beinhaltet, die sich von der Unterbrechungsvorrichtung (22) unterscheiden und jeweils einen offenen Zustand der Unterbrechung des Stroms über den Unterbrecher und einen geschlossenen Zustand des Durchgangs des Stroms über den Unterbrecher aufweisen, und die jeweils einem jeweils zugeordneten diskreten Einfügewiderstand (R1, R2, R3, ..., RN) zugeordnet sind, um selektiv den Durchgang des Stroms in dem zugeordneten diskreten Einfügewiderstand (R1, R2, R3, ..., RN) zu steuern, und dass zumindest ein Einfügeunterbrecher (S1, S2, S3,..., SN) in dem Hauptkreis (24) auf solche Weise angeordnet ist, dass er in seinem geschlossenen Zustand von dem Betriebsstrom durchflossen wird, und dass der zugeordnete diskrete Einfügewiderstand (R1, R2, R3, ..., RN) in dem Hauptkreis (24) elektrisch parallel zu dem zugeordneten Einfügeunterbrecher angeordnet ist.

2. Elektrische Anlage nach Anspruch 1, **dadurch gekennzeichnet, dass** ein erster (S1) und ein zweiter (S2) Einfügeunterbrecher in dem Hauptkreis (24) auf solche Weise angeordnet sind, dass sie in ihrem geschlossenen Zustand von dem Betriebsstrom durchflossen werden, und dass ein erster (R1) und ein zweiter (R2) diskreter Einfügewiderstand, die jeweils dem ersten (S1) und dem zweiten (S2) Einfügeunterbrecher zugeordnet sind, jeweils elektrisch parallel zu dem zugeordneten Einfügeunterbrecher angeordnet sind.

3. Elektrische Anlage nach Anspruch 1 oder 2, **dadurch gekennzeichnet, dass** die Anlage (23) ein System mit geregeltem variablem Widerstand (26) beinhaltet, für welches der Widerstandswert zumindest zwei unterschiedliche Zwischenwerte ungleich null annimmt, die zwischen dem unteren Wert und dem oberen Wert liegen.

4. Elektrische Anlage nach Anspruch 3, **dadurch gekennzeichnet, dass** das System mit geregeltem variablem Widerstand (26) N diskrete Einfügewiderstände (R1, R2, R3, ..., RN) und N zugeordnete Einfügeunterbrecher (S1, S2, S3, ...SN) beinhaltet, wobei jeder zugeordnete diskrete Einfügewiderstand (R1, R2, R3, ..., RN) in dem Hauptkreis (24) elektrisch parallel zu dem zugeordneten Einfügeunterbrecher angeordnet ist, und N eine ganze Zahl größer 3 darstellt.

5. Elektrische Anlage nach Anspruch 4, **dadurch gekennzeichnet, dass** das System mit geregeltem variablem Widerstand (26) einen Widerstandswert aufweist, der als Funktion der Einstellung zumindest zwei unterschiedliche Zwischenwerte ungleich null annehmen kann, die zwischen dem unteren Wert und dem oberen Wert liegen.

6. Elektrische Anlage nach einem der Ansprüche 1 bis 5, **dadurch gekennzeichnet, dass** zumindest ein Einfügeunterbrecher (S1, S2, S3, ..., SN) mechanisch ist.

7. Elektrische Anlage nach einem der Ansprüche 1 bis 6, **dadurch gekennzeichnet, dass** zumindest ein Einfügeunterbrecher (S1, S2, S3, ..., SN) elektronisch ist.

8. Elektrische Anlage nach einem der Ansprüche 1 bis 7, **dadurch gekennzeichnet, dass** zumindest ein Einfügeunterbrecher (S1, S2, S3, ..., SN) mechanisch durch eine Bewegung zumindest eines Organs der Unterbrechungsvorrichtung (22) gesteuert wird.

9. Elektrische Anlage nach einem der Ansprüche 1 bis 8, **dadurch gekennzeichnet, dass** zumindest ein Einfügeunterbrecher (S1, S2, S3, ..., SN) elektronisch gesteuert wird.

10. Elektrische Anlage nach einem der vorhergehenden Ansprüche, **dadurch gekennzeichnet, dass** die Koordinationsvorrichtung eine elektronische Steuereinheit umfasst.

11. Elektrische Anlage nach einem der vorhergehenden Ansprüche, **dadurch gekennzeichnet, dass** die Unterbrechungsvorrichtung (22) ein Trennschalter ist.

12. Elektrische Anlage nach einem der vorhergehenden Ansprüche, **dadurch gekennzeichnet, dass** der obere Widerstandswert (RSysEqSup) des Widerstandssystems (26) gegenüber dem in dem Hauptkreis (24) fließenden Strom gleich dem oder höher als der Quotient der Netzspannung (Udc) durch den maximalen gewünschten Spitzenstrom (Ides) ist, also der Quotient, von welchem der äquivalente Wellenimpedanzwert (Zeq) des elektrischen Kreises (24) außerhalb des Systems mit geregeltem variablem Widerstand abgezogen wird:

$$RSysEqSup = \frac{Udc}{Ides} - Zeq$$

13. Elektrische Anlage nach einem der vorhergehenden Ansprüche, **dadurch gekennzeichnet, dass** der Widerstandswert des Widerstandssystems mit geregeltem variablen Widerstand (26) so geregelt wird, dass er eine Abfolge von abnehmenden diskreten Werten (RSysEq(i)) annimmt, und dass die Schaltvorrichtung (30, 46) so ausgestaltet ist, dass eine Einfügedauer (Ti -T(i-1)) eines Zwischenwerts (RSysEq(i)), während welcher der Widerstandswert des Widerstandssystems mit geregeltem variablem Widerstand (26) so geregelt wird, dass er den diskreten Zwischenwert (RSysEq(i)) annimmt, gleich oder höher ist als:

$$- ln\left(\frac{RSysEq(i+1) + Zeq}{RSysEq(i) + Zeq}\right).RSysEq(i).Ceq$$

wobei:

- RSysEq(i) ein Widerstandszwischenwert des Widerstandssystems mit geregeltem variablem Widerstand (26) gegenüber dem in dem elektrischen Kreis fließenden Strom ist,
- T(i-1) der Zeitpunkt ist, an dem das Widerstandssystem mit geregeltem variablem Widerstand (26) geregelt wird, um den Zwischenwert (RSysEq(i)) anzunehmen,
- RSysEq(i+1) ein in der Reihenfolge der Abfolge von diskreten Widerstandswerten des Widerstandssystems mit geregeltem variablem Widerstand (26) folgender Widerstandswert gegenüber dem in dem elektrischen Kreis fließenden Strom ist,

- T(i) der Zeitpunkt ist, an dem das Widerstandssystem mit geregeltem variablem Widerstand (26) geregelt wird, um von dem Zwischenwert (RSysEq(i)) auf den folgenden Widerstandswert (RSysEq(i+1)) überzugehen,
- Zeq der äquivalente Wellenimpedanzwert des elektrischen Kreises (24) ist, einschließlich des gesamten Netzes, das mit dem Hauptkreis verbunden ist, jedoch außerhalb des Systems mit geregeltem variablem Widerstand,
- Ceq die äquivalente Kapazität des elektrischen Kreises (24) ist, einschließlich des gesamten Netzes, das mit dem Hauptkreis verbunden ist.

**Claims**

1. A DC high-voltage electrical installation comprising an apparatus (22) for cutting-off a DC high-voltage electric circuit, of the type comprising a main circuit (24) in which flows an operating electric current under DC high-voltage during a steady operating state of the installation, the cut-off apparatus (22) being likely to switch from an open state in which it interrupts the flow of an electric current in the main circuit (24) to a closed state in which it allows the flow of an electric current in the main circuit (24), of the type in which the installation (23) includes a controlled variable resistance system (26) comprising a resistance device (28, 48) associated with a switching device (30, 46) for modifying the resistance value of the resistance system (26) seen by the current flowing in the main electric circuit (24), said resistance value taking at least three distinct values, comprising at least one higher value, one lower value, and at least one non-zero intermediate value comprised between the lower value and the higher value, and the installation including a coordination device (32) for controlling switching instants (T1, T2, T'0, T'1) of the resistance values of the resistance system (26) as a function of a closing instant (T0, T'2) of the cut-off apparatus (22) from its open state to its closed state, the resistance device (28) including at least two discrete insertion resistors (R1, R2, R3, ..., RN),
**characterized in that** the switching device (30) includes at least two distinct insertion switches (S1, S2, S3, ..., SN), distinct from the cut-off apparatus (22), which present each an open state of current interruption through the switch and a closed state of current passage through the switch, and which are each associated with a respective associated discrete insertion resistor (R1, R2, R3, ..., RN) for selectively controlling the passage of the current in the associated discrete insertion resistor (R1, R2, R3, ..., RN), and
**in that** at least one insertion switch (S1, S2, S3, ..., SN) is arranged in the main circuit (24) so as to be, in its closed state, traversed by the operating current, and **in that** the associated discrete insertion resistor (R1, R2, R3, ..., RN) is arranged in the main circuit (24) electrically in parallel with the associated insertion switch.

2. The electrical installation according to claim 1, **characterized in that** first (S1) and second (S2) insertion switches are arranged in the main circuit (24) so as to be traversed by the operating current in their closed state, and **in that** first (R1) and second discrete insertion resistors (R2), respectively associated with the first (S1) and second (S2) insertion switches, are each arranged respectively electrically in parallel with the associated insertion switch.

3. The electrical installation according to claims 1 or 2, **characterized in that** the installation (23) includes a controlled variable resistance system (26) for which the said resistance value takes at least two distinct non zero intermediate values comprised between the lower value and the higher value.

4. The electrical installation according to claim 3, **characterized in that** the controlled variable resistance system (26) including N discrete insertion resistors (R1, R2, R3, ...RN) and N associated insertion switches (S1, S2, S3, ...SN), each associated discrete insertion resistor (R1, R2, R3, ...RN) being arranged electrically in the main circuit (24) in parallel with the associated insertion switch, and N being an integer superior to 3.

5. The electrical installation according to claim 4, **characterized in that** the controlled variable resistance system (26) has a resistance value, which depending on the setting, can take a least two distinct non zero intermediate values comprised between the lower value and the higher value.

6. The electrical installation according to any of claims 1 to 5, **characterized in that** at least one insertion switch (S1, S2, S3, ..., SN) is mechanical.

7. The electrical installation according to any of claims 1 to 6, **characterized in that** at least one insertion switch (S1, S2, S3, ..., SN) is electronic.

8. The electrical installation according to any of claims 1 to 7, **characterized in that** at least one insertion switch (S1, S2, S3, ..., SN) is mechanically controlled by a displacement of at least one member of the cut-off apparatus (22).

9. The electrical installation according to any of claims 1 to 8, **characterized in that** at least one insertion switch (S1, S2, S3, ..., SN) is electronically controlled.

10. The electrical installation according to any of the preceding claims, **characterized in that** the coordination device includes an electronic control unit.

11. The electrical installation according to any of the preceding claims, **characterized in that** the cut-off apparatus (22) is a circuit breaker.

12. The electrical installation according to any of the preceding claims, **characterized in that** the higher resistance value (RSysEqSup) of the resistance system (26), seen by the current flowing in the main circuit (24), is equal to or greater than the quotient of the voltage of the network (Udc) by the current of desired maximum peak (Ides), quotient from which is removed the equivalent wave impedance value (Zeq) of the electric circuit (24) excluding the controlled variable resistance system:

$$RSysEqSup = \frac{Udc}{Ides} - Zeq$$

13. The electrical installation according to any of the preceding claims, **characterized in that** the resistance value of the resistance system with a controlled variable resistance (26) is controlled to take a succession of decreasing discrete values (RSysEq(i)), and **in that** the switching device (30, 46) is configured so that an insertion duration (Ti-T(i-1)) of an intermediate value (RSysEq(i)), for which the resistance value of the resistance system with a controlled variable resistance (26) is controlled to take said discrete intermediate value (RSysEq(i)), is equal to or greater than:

$$-ln\left(\frac{RSysEq(i+1) + Zeq}{RSysEq(i) + Zeq}\right).RSysEq(i).Ceq$$

Where:

- RSysEq(i) is an intermediate resistance value of the resistance system with a controlled variable resistance (26), seen by the current flowing in the electric circuit;
- T(i-1) is the instant at which the resistance system with a controlled variable resistance (26) is controlled to take said intermediate value (RSysEq(i));
- RSysEq(i+1) is a next resistance value in the order of succession of the discrete resistance values of the resistance system with a controlled variable resistance (26), seen by the current flowing in the electric circuit;
- T(i) is the instant at which the resistance system with a controlled variable resistance (26) is controlled to move from said intermediate value (RSysEq(i)) to the next resistance value (RSysEq(i+1));
- Zeq is the equivalent wave impedance value of the electric circuit (24), including any network connected to the main circuit, but excluding the controlled variable resistance system;
- Ceq is the equivalent capacitance of the electric circuit (24), including any network connected to the main circuit.

FIG.1

EP 3 559 965 B1

FIG.2A

FIG.2B

FIG.2C

FIG.2D

FIG.3

FIG.4

FIG.6

FIG.5A

FIG.5B

FIG.5C

FIG.5D

FIG.7

FIG.8

**EP 3 559 965 B1**

## RÉFÉRENCES CITÉES DANS LA DESCRIPTION

**Documents brevets cités dans la description**

- FR 2102793

- FR 1549517